(19) Europäisches Patentamt
European Patent Office
Office européen des brevets

(11) **EP 3 554 009 A1**

(12) **EUROPEAN PATENT APPLICATION**
published in accordance with Art. 153(4) EPC

(43) Date of publication:
**16.10.2019 Bulletin 2019/42**

(51) Int Cl.:
***H04L 12/24*** (2006.01)　　　***H04L 29/08*** (2006.01)

(21) Application number: **17888668.5**

(22) Date of filing: **13.10.2017**

(86) International application number:
**PCT/CN2017/106001**

(87) International publication number:
**WO 2018/120990 (05.07.2018 Gazette 2018/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.12.2016 CN 201611225118**

(71) Applicant: **Huawei Technologies Co., Ltd.
Longgang District
Shenzhen, Guangdong 518129 (CN)**

(72) Inventors:
• **DING, Jian
 Shenzhen
 Guangdong 518129 (CN)**
• **CHEN, Lipeng
 Shenzhen
 Guangdong 518129 (CN)**
• **ZHU, Guanyu
 Shenzhen
 Guangdong 518129 (CN)**

(74) Representative: **Gill Jennings & Every LLP
MTH
The Broadgate Tower
20 Primrose Street
London EC2A 2ES (GB)**

(54) **METHOD AND DEVICE FOR SERVICE DEPLOYMENT**

(57)　This application provides a service deployment method and apparatus. The method includes: determining a first component node that needs to be deployed currently in a to-be-deployed service; obtaining, from a physical cluster, a physical node set that meets a computing resource requirement of the first component node; and obtaining, from the physical node set according to a current available network resource of each physical node in the physical node set, a physical node to which the first component node is mapped. According to the technical solution provided in this application, in a node mapping process of service deployment, that is, in a process of determining a physical node to which a component node is mapped, a computing resource and a network resource are comprehensively considered. Compared with an existing service deployment solution, this technical solution can avoid a network resource allocation conflict and local overload of a physical link to some extent. Therefore, a service resource requirement can be better met.

100

FIG. 4

**Description**

This application claims priority to Chinese Patent Application No. 201611225118.X, filed with the Chinese Patent Office on December 27, 2016 and entitled "SERVICE DEPLOYMENT METHOD AND APPARATUS", which is incorporated herein by reference in its entirety.

**TECHNICAL FIELD**

This application relates to the field of service deployment, and more specifically, to a service deployment method and apparatus.

**BACKGROUND**

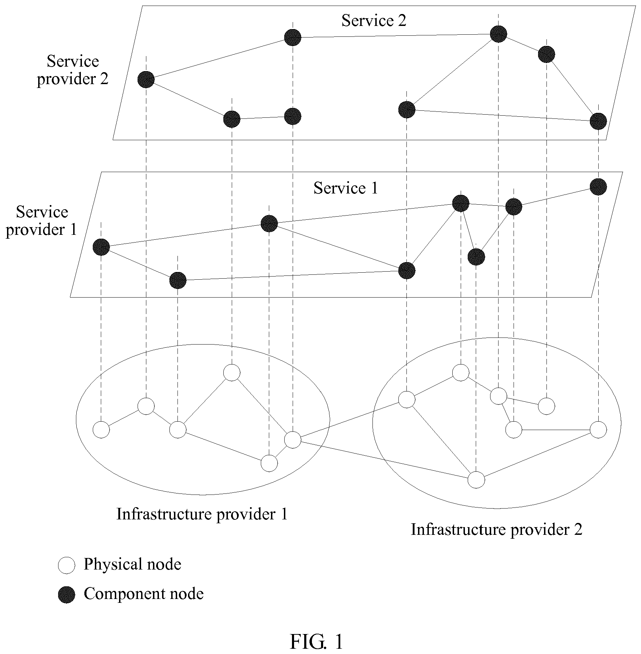

In a cloud distributed environment, during initial service deployment, a virtualization technology is used to abstract a logical network and a plurality of different services are simultaneously created and run on a physical cluster (which is also referred to as an underlying network infrastructure). Each service includes several component nodes and logical links. A component node is a logical node in a logical network corresponding to the service, and may also be referred to as a virtual node. A logical link is a link between component nodes. In other words, a component node and a logical link of a service form a logical network corresponding to the service. Different services are isolated from each other and the different services each maintain an independent network protocol system. A system architecture of initial service deployment is shown in FIG. 1. Physical nodes provided by an infrastructure provider 1 and an infrastructure provider 2 form a physical cluster, two services, a service 1 and a service 2 shown in FIG. 1, are simultaneously run on the physical cluster, the service 1 and the service 2 are respectively provided by a service provider 1 and a service provider 2 and are isolated from each other, and the service 1 and the service 2 each maintain an independent network protocol system.

In the cloud distributed environment, initial service deployment is a core issue in a resource scheduling process. A main objective of initial service deployment is to map a logical service network (for example, the service 1 shown in FIG. 1) to a physical cluster in a high-efficiency and agile manner when node and link constraint conditions are met. An initial service deployment process is divided into two parts: node mapping and link mapping. As the names imply, node mapping is to map a component node to a physical node, and link mapping is to map, after a node mapping phase is complete, a logical link between component nodes to a physical path between physical nodes selected in the node mapping phase.

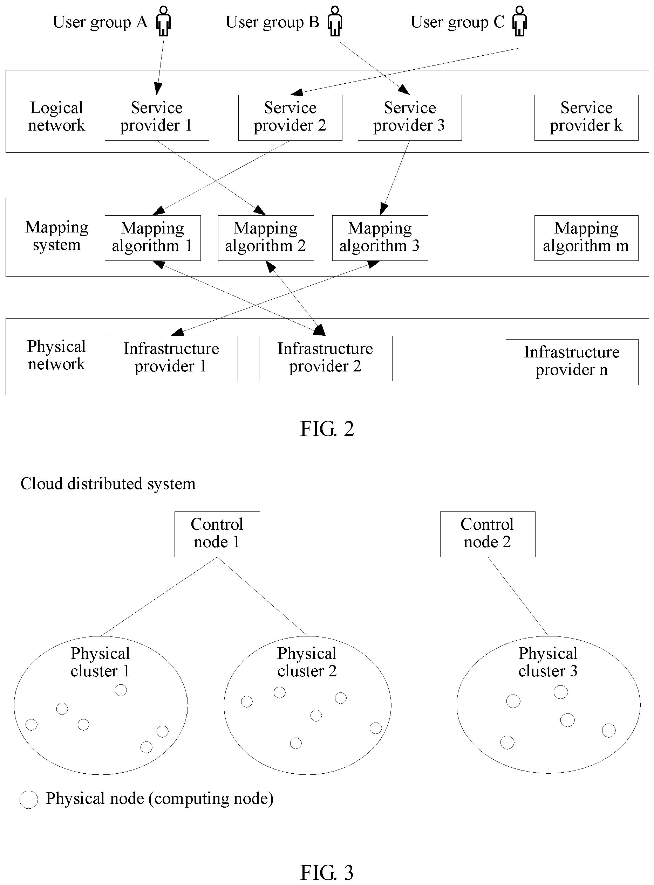

As shown in FIG. 2, three different user groups A, B, and C access different service providers according to requirements of the three user groups, to obtain network services. Specifically, the user group A accesses a service provider 1, the user group B accesses a service provider 3, and the user group C accesses a service provider 2. A service provider constructs a corresponding logical service network according to a service requirement of a user. For example, the service provider 1 constructs a corresponding logical service network 1 according to a service requirement of the user group A, and then maps the logical service network 1 to a physical network of an infrastructure provider 2 by using an initial service deployment algorithm (a mapping algorithm 2 in a mapping system shown in FIG. 2). In the cloud distributed environment, performance of the initial service deployment algorithm determines utilization efficiency of an underlying physical network and an operation effect of an entire service environment.

In an initial service deployment algorithm used in an existing service deployment solution, only a computing resource scheduling policy is considered usually. Therefore, a network resource allocation conflict is likely to occur, for example, local overload of a physical link occurs. Consequently, a service deployment requirement cannot be met.

**SUMMARY**

This application provides a service deployment method and apparatus. A computing resource and a network resource are comprehensively considered in a node mapping process. Therefore, compared with an existing service deployment solution, this application can avoid a network resource allocation conflict and local overload of a physical link to some extent. Therefore, a service resource requirement can be better met.

According to a first aspect, a service deployment method is provided, where the method includes: determining a first component node that needs to be deployed currently in a to-be-deployed service; obtaining, from a physical cluster, a physical node set that meets a computing resource requirement of the first component node; and obtaining, from the physical node set according to a current available network resource of each physical node in the physical node set, a physical node to which the first component node is mapped.

In this solution, in a node mapping process of service deployment, that is, in a process of determining a physical node to which a component node is mapped, a computing resource and a network resource are comprehensively considered. Compared with an existing service deployment solution, this solution can avoid a network resource allocation conflict and local overload of a physical link to some extent. Therefore, a service resource requirement can be better met.

With reference to the first aspect, in a possible implementation of the first aspect, the obtaining, from the physical node set, a physical node to which the first component node is mapped includes: obtaining, from the physical node set according to the current available network resource of each physical node, closeness centrality of each physical node in the physical cluster, and a degree of association between each physical node and a physical node of a component node that has been deployed in the to-be-deployed service, the physical node to which the first component node is mapped.

In this solution, a physical node to which a component node is mapped is determined according to closeness centrality and a degree of association of a physical node. Therefore, compared with an existing service deployment solution, in this embodiment of this application, a relatively appropriate physical node to which a component node is mapped can be determined, so that a network resource allocation conflict and local overload of a physical link can be effectively avoided. Therefore, a service resource requirement can be better met.

With reference to the first aspect or the foregoing possible implementation of the first aspect, in a possible implementation of the first aspect, the obtaining, from the physical node set, the physical node to which the first component node is mapped includes: determining a ranking score of each physical node according to the current available network resource of each physical node, the closeness centrality of each physical node in the physical cluster, and the degree of association between each physical node and the physical node of the component node that has been deployed in the to-be-deployed service, where the ranking score of each physical node is positively correlated with the current available network resource, the closeness centrality, and the degree of association of each physical node; and determining a physical node with a highest ranking score in the physical node set as the physical node to which the first component node is mapped.

With reference to the first aspect or the foregoing possible implementation of the first aspect, in a possible implementation of the first aspect, the determining a ranking score of each physical node according to the current available network resource of each physical node, the closeness centrality of each physical node in the physical cluster, and the degree of association between each physical node and the physical node of the component node that has been deployed in the to-be-deployed service includes: calculating a ranking score $Value_{phy}(p_i)$ of a first physical node $p_i$ in the physical node set according to the following formula:

$$Value_{phy}(p_i) = \frac{\sum_{j=1}^{n}\left(cpu_{p_j} \cdot ram_{p_j} \cdot Minbw(p_i, p_j)\right)}{\sum_{j=1}^{n} d(p_i, p_j)} \cdot \mu^{\frac{\sum_{k=1}^{m} Minbw(p_i, p_k)}{\sum_{k=1}^{m} d(p_i, p_k)}},$$

where $Minbw(p_i, p_j)$ represents a current available network bandwidth resource between the first physical node $p_i$ and a second physical node $p_j$ in the physical cluster, $d(p_i, p_j)$ represents a quantity of hops of a shortest path from the first physical node $p_i$ to the second physical node $p_j$, $j$ is 1, ..., $n$, and $n$ is a quantity of physical nodes in the physical cluster; when the first physical node $p_i$ and the second physical node $p_j$ are a same physical node, $Minbw(p_i, p_j)$ has a value of 0, and $d(p_i, p_j)$ has a value of 1; and $cpu_{pj}$ represents a current available central processing unit CPU resource of the second physical node $p_j$, $ram_{pj}$ represents a current available random access memory RAM resource of the second physical node $p_j$, $p_k$ represents a physical node to which a component node that has been deployed in the to-be-deployed service and that has a logical link to the currently deployed first component node is mapped, $m$ is a quantity of physical nodes to which the component node that has been deployed in the to-be-deployed service and that has the logical link to the currently deployed first component node are mapped, and $\mu$ is a constant greater than or equal to 1.

With reference to the first aspect or the foregoing possible implementations of the first aspect, in a possible implementation of the first aspect, the determining a first component node that needs to be deployed currently in a to-be-deployed service includes: determining a deployment order of all component nodes in the to-be-deployed service according to a computing resource requirement and a network resource requirement of each component node in the to-be-deployed service; and determining, according to the deployment order of all the nodes, the first component node that needs to be deployed currently.

In this solution, the deployment order of all the component nodes in the to-be-deployed service is determined according to the computing resource requirement and the network resource requirement of each component node, so that a component node having a relatively high resource requirement can be preferentially deployed. Compared with the prior art, in this solution, a service deployment solution can be optimized, a service resource requirement can be better meet, and utilization of overall resources in a physical cluster can be improved.

With reference to the first aspect or the foregoing possible implementation of the first aspect, in a possible implementation of the first aspect, the determining a deployment order of all component nodes in the to-be-deployed service according to a computing resource requirement and a network resource requirement of each component node in the to-be-deployed service includes: determining the deployment order of all the component nodes according to the computing resource requirement and the network resource requirement of each component node, and betweenness centrality and degree centrality of each component node in a logical network corresponding to the to-be-deployed service.

Optionally, a function or an algorithm in which the computing resource requirement and the network resource requirement of each component node, and the betweenness centrality and the degree centrality of each component node in the logical network corresponding to the to-be-deployed service are used as independent variables is designed, and the deployment order of all the component nodes is determined according to dependent variables of the function or the algorithm.

With reference to the first aspect or the foregoing possible implementation of the first aspect, in a possible implementation of the first aspect, the determining the deployment order of all the component nodes according to the computing resource requirement and the network resource requirement of each component node, and betweenness centrality and degree centrality of each component node in a logical network corresponding to the to-be-deployed service includes: determining a ranking score of each component node according to the computing resource requirement and the network resource requirement of each component node, and the betweenness centrality and the degree centrality of each component node in the logical network, where the ranking score of each component node is positively correlated with the computing resource requirement, the network resource requirement, the betweenness centrality, and the degree centrality of each component node; and determining the deployment order of all the component nodes according to a descending order of ranking scores of all the component nodes in the to-be-deployed service.

In this solution, the ranking score of each component node is determined according to the computing resource requirement and the network resource requirement of each component node, and the betweenness centrality and the degree centrality of each component node in the logical network, that is, a ranking score of a component node can represent a resource requirement of the component node and an importance degree of the component node in the network; and physical nodes to which all the component nodes are mapped are successively determined according to a descending order of ranking scores. In this way, a physical node to which a relatively important component node having a relatively high resource requirement in a service is mapped can be preferentially determined. Compared with the prior art, in this solution, a service deployment solution can be effectively optimized, a service resource requirement can be better meet, and utilization of overall resources in a physical cluster can be improved.

With reference to the first aspect or the foregoing possible implementation of the first aspect, in a possible implementation of the first aspect, the determining a ranking score of each component node according to the computing resource requirement and the network resource requirement of each component node, and the betweenness centrality and the degree centrality of each component node in the logical network includes: determining a ranking score $Value_{vir}(v)$ of a second component node $v$ in the to-be-deployed service according to the following formula:

$$Value_{vir}(v) = \left(\alpha CPU(v) + \beta RAM(v) + \gamma \sum_{i=1}^{c} BW_i(v)\right) \cdot \frac{s(v)}{S} \cdot D(v),$$

where $CPU(v)$ represents a CPU resource requirement of the second component node $v$, $RAM(v)$ represents a RAM resource requirement of the second component node $v$, $\sum_{i=1}^{c} BW_i(v)$ represents a network bandwidth resource requirement of the second component node $v$, $BW_i(v)$ represents a network bandwidth resource requirement of an $i^{th}$ logical link connected to the second component node $v$, $c$ is a total quantity of logical links connected to the second component node $v$, $s(v)$ represents a quantity of shortest paths that are between all component node pairs in the logical network and that pass through the second component node $v$, $S$ represents a total quantity of shortest paths between all the component node pairs in the logical network, $\frac{s(v)}{S}$ is used to represent betweenness centrality of the second component node $v$ in the logical network, and $D(v)$ is degree centrality of the second component node $v$ in the logical network, where $\alpha$, $\beta$, and $\gamma$ are weights.

With reference to the first aspect or the foregoing possible implementations of the first aspect, in a possible implementation of the first aspect, the determining, according to the deployment order of all the nodes, the first component node that needs to be deployed currently includes: adjusting the deployment order of all the nodes according to priority information of all the component nodes in the to-be-deployed service; and determining, according to an adjusted deployment order of all the nodes, the first component node that needs to be deployed currently.

With reference to the first aspect or the foregoing possible implementations of the first aspect, in a possible implementation of the first aspect, the first component node is a logical combined node of a plurality of component nodes that are in the to-be-deployed service and that are required to be deployed on a same physical node.

With reference to the first aspect or the foregoing possible implementations of the first aspect, in a possible implementation of the first aspect, a third component node is a component node that has been deployed in the to-be-deployed service, and deployment of the first component node and the third component node on a same physical node is prohibited, where the obtaining, from a physical cluster, a physical node set that meets a computing resource requirement of the first component node includes: obtaining the physical node set from the physical cluster from which a physical node to which the third component node is mapped is deleted.

With reference to the first aspect or the foregoing possible implementations of the first aspect, in a possible implementation of the first aspect, the method further includes: obtaining a plurality of to-be-deployed services; determining a service gain of each service according to a computing resource requirement and a network resource requirement of each of the plurality of services; and determining the to-be-deployed service according to a descending order of service gains of all of the plurality of services.

Therefore, in this solution, a service having a relatively high resource requirement is preferentially deployed, so that appropriate service deployment can be implemented, and utilization of overall resources in a physical cluster can be improved.

According to a second aspect, a service deployment apparatus is provided, configured to perform the method according to the first aspect or any possible implementation of the first aspect. Specifically, the apparatus may include a module configured to perform the method according to the first aspect or any possible implementation of the first aspect.

According to a third aspect, a service deployment apparatus is provided, where the apparatus includes a memory and a processor, the memory is configured to store an instruction, and the processor is configured to execute the instruction stored in the memory. The processor executes the instruction stored in the memory, to enable the processor to perform the method according to the first aspect or any possible implementation of the first aspect.

**BRIEF DESCRIPTION OF DRAWINGS**

FIG. 1 is a schematic diagram of an application scenario according to an embodiment of this application;

FIG. 2 is another schematic diagram of an application scenario according to an embodiment of this application;

FIG. 3 is a schematic diagram of a cloud distributed system according to an embodiment of this application;

FIG. 4 is a schematic flowchart of a service deployment method according to an embodiment of this application;

FIG. 5 is another schematic flowchart of a service deployment method according to an embodiment of this application;

FIG. 6 is still another schematic flowchart of a service deployment method according to an embodiment of this application;

FIG. 7 is still another schematic flowchart of a service deployment method according to an embodiment of this application;

FIG. 8 is a schematic block diagram of a service deployment apparatus according to an embodiment of this application;

FIG. 9 is another schematic block diagram of a service deployment apparatus according to an embodiment of this application; and

FIG. 10 is a schematic block diagram of a resource scheduling management system according to an embodiment of this application.

**DESCRIPTION OF EMBODIMENTS**

The following describes technical solutions in the embodiments of this application with reference to accompanying drawings.

FIG. 3 is a schematic diagram of a cloud distributed system according to an embodiment of this application. The cloud distributed system includes a plurality of control nodes (for example, FIG. 3 shows a control node 1 and a control node 2) and a plurality of physical clusters (for example, FIG. 3 shows physical clusters 1, 2, and 3). Each physical cluster includes a plurality of physical nodes, and a physical node is a physical resource carrier. Specifically, the physical node is a physical machine, a virtual machine, a container, or the like. The physical node may also be referred to as a computing node. A control node is configured to create and run, on a physical cluster according to a service request from a user, a service requested by the user. For example, the control node 1 receives a service request from a user. Assuming that the service request is used to request for creating the service 1 shown in FIG. 1, the control node 1 performs node mapping and link mapping for the service 1 on the physical cluster 1 and/or the physical cluster 2, so as to create and run the service 1.

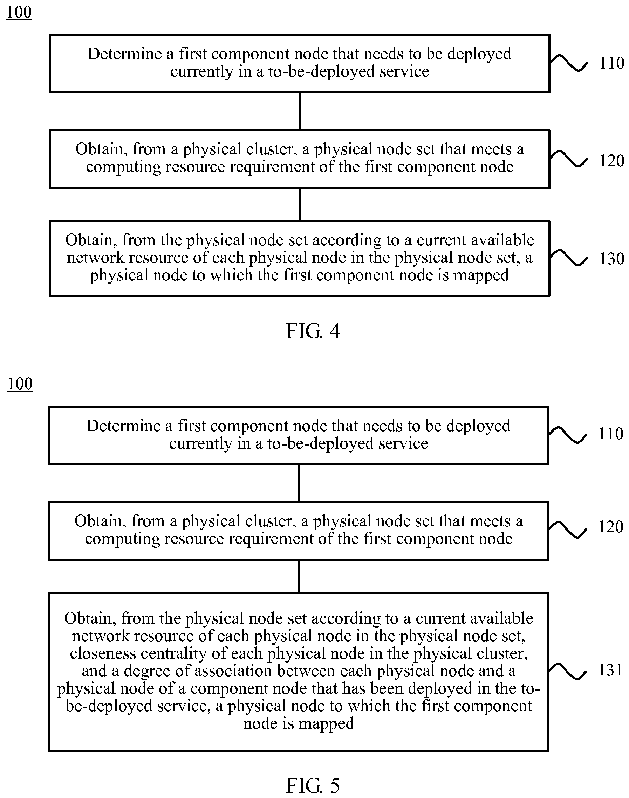

FIG. 4 is a schematic flowchart of a service deployment method 100 according to an embodiment of this application. For example, the method 100 may be performed by a control node shown in FIG. 3. Specifically, the method 100 includes the following steps.

110. Determine a first component node that needs to be deployed currently in a to-be-deployed service.

It should be understood that, the to-be-deployed service includes a plurality of component nodes, and each component node needs to be deployed, that is, a physical node to which each component node is mapped needs to be determined. For ease of understanding and description, this embodiment describes a component node deployment process by using the first component node as an example.

120. Obtain, from a physical cluster, a physical node set that meets a computing resource requirement of the first component node.

Specifically, a computing resource is a resource used to support a device in processing data or performing a computing function. For example, the computing resource includes a central processing unit (Central Processing Unit, CPU) resource and a random-access memory (Random-Access Memory, RAM) resource. The CPU resource may indicate a CPU that has a specific quantity of cores and that is included in the device, or may indicate a CPU frequency, a memory size, and the like of the device. The RAM resource may indicate a size of storage space of the device. The storage space includes virtual storage space and physical storage space. The computing resource requirement of the first component node means a CPU resource and a RAM resource that are required by the first component node.

It should be understood that the physical cluster includes a plurality of physical nodes. For example, as shown in FIG. 1, the physical nodes provided by the infrastructure provider 1 and the infrastructure provider 2 form a physical cluster.

Specifically, physical nodes that are in the physical cluster and whose current available computing resources meet the computing resource requirement of the first component node are selected, and these selected physical nodes form the physical node set of the first component node.

130. Obtain, from the physical node set according to a current available network resource of each physical node in the physical node set, a physical node to which the first component node is mapped.

Specifically, a network resource of a node may indicate a network bandwidth resource available to the node. In addition, in a possible implementation, a network resource may alternatively be quantized and measured by using a network latency, a link distance, a packet loss rate, or another indicator used to describe the network resource.

Specifically, in step 130, a physical node that is in the physical node set and that has a maximum of current available network resources may be used as the physical node to which the first component node is mapped. Alternatively, a physical node that is in the physical node set and whose current available network resource can meet a network resource requirement of the first component node may be determined as the physical node to which the first component node is mapped. If there are a plurality of physical nodes that meet the network resource requirement of the first component node, one of the plurality of physical nodes may be selected as the physical node to which the first component node is mapped. Alternatively, a physical node that is in the physical node set and that has a maximum sum of a current available network resource and a current available computing resource may be used as the physical node to which the first component node is mapped.

The network resource requirement of the first component node means network bandwidth required by a link that is in a logical network corresponding to the to-be-deployed service and that is directly connected to the first component node. In addition, in a possible implementation, the network resource requirement of the first component node may alternatively be quantized and measured by using a network latency, a link distance, a packet loss rate, or another indicator that is allowable by the first component node, where the another indicator is used to describe a network resource.

According to this embodiment of this application, in a node mapping process of service deployment, that is, in a process of determining a physical node to which a component node is mapped, a computing resource and a network resource are comprehensively considered. Compared with an existing service deployment solution, this embodiment can avoid a network resource allocation conflict and local overload of a physical link to some extent. Therefore, a service resource requirement can be better met.

It should be noted that the following descriptions in this specification represent a same meaning: A physical node to which a component node is mapped is determined, a physical node is deployed specific to a component node, and a component node is deployed.

To determine a better physical node to which the first component node is mapped, according to this embodiment of this application, when a physical node is deployed specific to a component node, a current available network resource of the physical node, closeness centrality of the physical node, and a degree of association between the physical node and a physical node to which a component node that has been deployed in the to-be-deployed service is mapped are all considered.

It should be understood that a centrality indicator of a node is an important indicator used to measure an importance degree of the node in a network. Commonly used centrality indicators include degree centrality, betweenness centrality, closeness centrality, and the like. These indicators describe an importance degree of a node in a network from different perspectives. For example, degree centrality of a node emphasizes a quantity of links between the node and an adjacent node, and may reflect an importance degree of the node in a network to some extent; betweenness centrality describes a control capability of the node or a link on information or a stream in the network, and is usually calculated according to a shortest path; and closeness centrality is mainly used to measure closeness between the node and another node in the network. Usually, when a shortest path between a node and another node in a network is shorter, it is considered that the two nodes are closer, and are easier to exchange information.

Optionally, in a possible embodiment, as shown in FIG. 5, step 130 of obtaining, from the physical node set according to a current available network resource of each physical node in the physical node set, a physical node to which the first component node is mapped includes: step 131 of obtaining, from the physical node set according to the current available network resource of each physical node in the physical node set, closeness centrality of each physical node in the physical cluster, and a degree of association between each physical node and a physical node of a component node that has been deployed in the to-be-deployed service, the physical node to which the first component node is mapped.

Specifically, the physical node to which the first component node is mapped may be determined by successively considering the current available network resources, the closeness centrality, and the degrees of association of all the physical nodes in the physical node set. For example, first, a physical node subset 1 (including one or more physical nodes) whose current available network resource meets the network resource requirement of the first component node is found from the physical node set; then, a physical node subset 2 (including one or more physical nodes) whose closeness centrality meets a preset threshold is found from the physical node subset 1; and finally, a physical node with a highest degree of association in the physical node subset 2 is used as the physical node to which the first component node is mapped. For another example, first, a physical node subset 3 (including one or more physical nodes) whose closeness centrality meets a preset threshold is found from the physical node set; then, a physical node subset 4 (including one or more physical nodes) whose current available network resource meets the network resource requirement of the first component node is found from the physical node subset 3; and finally, a physical node with a highest degree of association in the physical node subset 4 is used as the physical node to which the first component node is mapped. For brevity, details are not further described by using examples. To sum up, according to this embodiment of this application, the physical node to which the first component node is mapped is determined by comprehensively considering the three factors: the current available network resource, the closeness centrality, and the degree of association of the physical node. However, an order of considering the three factors is not limited in this embodiment of this application, and in actual application, the order of considering the three factors may be determined according to a specific requirement.

Specifically, a comprehensive parameter may alternatively be calculated according to a current available network resource, closeness centrality, and a degree of association of a physical node; a comprehensive parameter of each physical node in the physical node set is obtained through calculation based on a same algorithm; and a physical node whose comprehensive parameter exceeds a threshold is used as the physical node to which the first component node is mapped. For example, a physical node with a maximum comprehensive parameter is used as the physical node to which the first component node is mapped.

In this embodiment of this application, a physical node to which a component node is mapped is determined according to closeness centrality and a degree of association of a physical node. Therefore, compared with an existing service deployment solution, in this embodiment of this application, a relatively appropriate physical node to which a component node is mapped can be determined, so that a network resource allocation conflict and local overload of a physical link can be effectively avoided. Therefore, a service resource requirement can be better met.

Optionally, in a possible embodiment, step 131 of obtaining, from the physical node set according to the current available network resource of each physical node in the physical node set, closeness centrality of each physical node in the physical cluster, and a degree of association between each physical node and a physical node of a component node that has been deployed in the to-be-deployed service, the physical node to which the first component node is mapped includes:

determining a ranking score of each physical node according to the current available network resource of each physical node, the closeness centrality of each physical node in the physical cluster, and the degree of association between each physical node and the physical node of the component node that has been deployed in the to-be-deployed service, where the ranking score of each physical node is positively correlated with the current available network resource, the closeness centrality, and the degree of association of each physical node; and determining a physical node with a highest ranking score in the physical node set as the physical node to which the first component node is mapped.

Specifically, that the ranking score of each physical node is positively correlated with the current available network resource, the closeness centrality, and the degree of association of each physical node means that: The closeness centrality and the degree of association keep unchanged, and the ranking score increases with an increase in the current available network resource; the current available network resource and the degree of association keep unchanged, and the ranking score increases with an increase in a value of the closeness centrality; or the current available network resource and the closeness centrality keep unchanged, and the ranking score increases with an increase in a value of the degree of association.

Preferably, in a possible embodiment, a ranking score $Value_{phy}(p_i)$ of a first physical node $p_i$ in the physical node set is calculated according to the following formula:

$$Value_{phy}(p_i) = \frac{\sum_{j=1}^{n}\left(cpu_{p_j} \cdot ram_{p_j} \cdot Minbw(p_i, p_j)\right)}{\sum_{j=1}^{n} d(p_i, p_j)} \cdot \mu^{\frac{\sum_{k=1}^{m} Minbw(p_i, p_k)}{\sum_{k=1}^{m} d(p_i, p_k)}} \qquad (1)$$

where $Minbw(p_i, p_j)$ represents a current available network bandwidth resource between the first physical node $p_i$ and a second physical node $p_j$ in the physical cluster, $d(p_i, p_j)$ represents a quantity of hops of a shortest path from the first physical node $p_i$ to the second physical node $p_j$, $j$ is 1, ..., $n$, and $n$ is a quantity of physical nodes in the physical cluster; when the first physical node $p_i$ and the second physical node $p_j$ are a same physical node, $Minbw(p_i, p_j)$ has a value of 0, and $d(p_i, p_j)$ has a value of 1; and $cpu_{p_j}$ represents a current available central processing unit CPU resource of the second physical node $p_j$, $ram_{p_j}$ represents a current available random access memory RAM resource of the second physical node $p_j$, $p_k$ represents a physical node to which a component node that has been deployed in the to-be-deployed service and that has a logical link to the currently deployed first component node is mapped, $m$ is a quantity of physical nodes to which the component node that has been deployed in the to-be-deployed service and that has the logical link to the currently deployed first component node are mapped, and $\mu$ is a constant greater than or equal to 1. It should be understood that $\mu$ may be used as a setting parameter, and a value range of $\mu$ is from 1 to Euler's constant e (which is approximately 2.71828). $\dfrac{\sum_{j=1}^{n}\left(cpu_{p_j} \cdot ram_{p_j} \cdot Minbw(p_i, p_j)\right)}{\sum_{j=1}^{n} d(p_i, p_j)}$ in Formula (1) is closeness centrality, defined in this embodiment of this application, of the first physical node $p_i$, and $\mu^{\frac{\sum_{k=1}^{m} Minbw(p_i, p_k)}{\sum_{k=1}^{m} d(p_i, p_k)}}$ is a degree of association, defined in this embodiment of this application, between the first physical node $p_i$ and a physical node to which a component node that has been deployed in the to-be-deployed service is mapped.

It should be understood that Formula (1) is only used as an embodiment for calculating the ranking score of the first physical node, and does not limit the protection scope of this embodiment of this application. In actual application, another feasible formula used to calculate a ranking score of a physical node may be created according to definitions of the closeness centrality and the degree of association.

In the foregoing description, the ranking score calculation solution is described by using the first physical node as an example with reference to the embodiment of Formula (1). It should be understood that, the algorithm shown in Formula (1) is applicable to each physical node in the physical node set, that is, the first physical node is used to represent each physical node in the physical node set.

It should be understood that, overall resources (including a computing resource and a network resource) in an underlying physical resource pool are limited and continually decrease with expansion of service deployment. In this way, compared with a currently deployed component node, a previously deployed component node has more available resources, and has more flexible deployable locations in the physical cluster (that is, optional physical nodes). Based on this, in this embodiment of this application, a component node having a relatively high resource requirement is preferentially deployed for a to-be-deployed service.

Optionally, in a possible embodiment, step 110 of determining a first component node that needs to be deployed currently in a to-be-deployed service includes: determining a deployment order of all component nodes in the to-be-deployed service according to a computing resource requirement and a network resource requirement of each component node in the to-be-deployed service; and determining, according to the deployment order of all the component nodes, the first component node that needs to be deployed currently.

For example, a descending order based on a sum of the computing resource requirement and the network resource requirement of each component node is used as the deployment order of all the component nodes in the to-be-deployed service. For another example, when the computing resource requirements of all the component nodes in the to-be-deployed service are basically the same, a descending order of the network resource requirements of all the component nodes may be used as the deployment order of all the component nodes. For another example, when the network resource requirements of all the component nodes in the to-be-deployed service are basically the same, a descending order of the computing resource requirements of all the component nodes may be used as the deployment order of all the component nodes.

In this embodiment of this application, the deployment order of all the component nodes in the to-be-deployed service is determined according to the computing resource requirement and the network resource requirement of each component node, so that a component node having a relatively high resource requirement can be preferentially deployed. Compared with the prior art, in this embodiment, a service deployment solution can be optimized, a service resource requirement can be better meet, and utilization of overall resources in a physical cluster can be improved.

As described above, degree centrality and betweenness centrality of a node are two important indicators used to measure an importance degree of the node in a network. The degree centrality of the node emphasizes a quantity of links between the node and an adjacent node, and may reflect the importance degree of the node in the network to some extent. The betweenness centrality describes a control capability of the node or a link on information or a stream in the network, and is usually calculated according to a shortest path.

To preferentially deploy a relatively important component node, in this embodiment of this application, the computing resource requirement and the network resource requirement of each component node, and the betweenness centrality and the degree centrality of each component node are all considered when the deployment order of all the component nodes is determined.

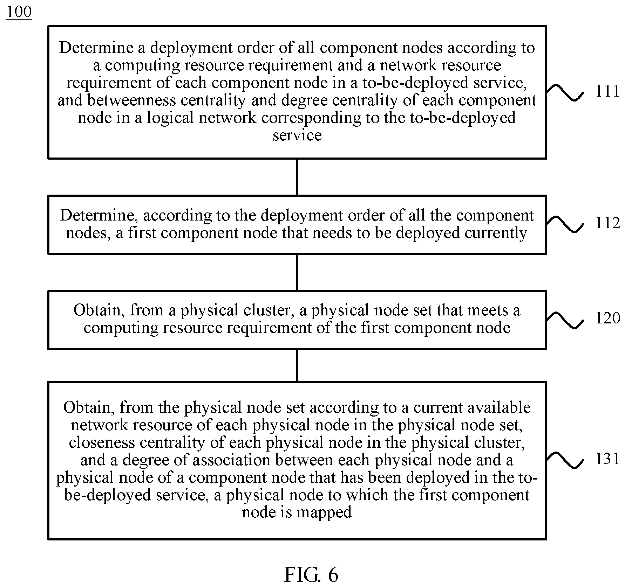

Optionally, in a possible embodiment, as shown in FIG. 6, step 110 of determining a first component node that needs to be deployed currently in a to-be-deployed service includes: step 111 of determining the deployment order of all the component nodes according to the computing resource requirement and the network resource requirement of each component node in the to-be-deployed service, and betweenness centrality and degree centrality of each component node in a logical network corresponding to the to-be-deployed service; and step 112 of determining, according to the deployment order of all the component nodes, the first component node that needs to be deployed currently.

For example, component nodes in the to-be-deployed service are divided into a component node subset 1 and a component node subset 2 according to a sum of a computing resource requirement and a network resource requirement. Assuming that a sum of a computing resource requirement and a network resource requirement of each component node in the component node subset 1 is greater than a threshold A, and that a sum of a computing resource requirement and a network resource requirement of each component node in the component node subset 2 is equal to or less than the threshold A, the component node in the component node subset 1 is arranged before the component node in the component node subset 2, that is, the component node in the component node subset 1 is deployed before the component node in the component node subset 2. Then, a deployment order of all component nodes in the component node subset 1 is determined according to betweenness centrality and degree centrality. For example, a deployment order of all component nodes in each of the component node subset 1 and the component node subset 2 is determined according to a descending order based on a sum of a betweenness centrality value and a degree centrality value.

The following example is only an example but not a limitation. In actual application, the deployment order of all the component nodes in the to-be-deployed service may be appropriately determined according to an importance degree reflected by the four factors: the computing resource requirement, the network resource requirement, the betweenness centrality, and the degree centrality of the component node. This is not limited in this embodiment of this application.

Optionally, in a possible embodiment, step 111 of determining the deployment order of all the component nodes according to the computing resource requirement and the network resource requirement of each component node in the to-be-deployed service, and betweenness centrality and degree centrality of each component node in a logical network corresponding to the to-be-deployed service includes:

determining a ranking score of each component node according to the computing resource requirement and the network resource requirement of each component node, and the betweenness centrality and the degree centrality of each component node in the logical network, where the ranking score of each component node is positively correlated with the computing resource requirement, the network resource requirement, the betweenness centrality, and the degree centrality; and determining the deployment order of all the component nodes according to a descending order of ranking scores of all the component nodes in the to-be-deployed service.

That the ranking score of each component node is positively correlated with the computing resource requirement, the network resource requirement, the betweenness centrality, and the degree centrality means that: The network resource requirement, the betweenness centrality, and the degree centrality keep unchanged, and the ranking score increases with an increase in the computing resource requirement; the computing resource requirement, the betweenness centrality, and the degree centrality keep unchanged, and the ranking score increases with an increase in the network resource requirement; the computing resource requirement, the network resource requirement, and the degree centrality keep unchanged, and the ranking score increases with an increase in the betweenness centrality; or the computing resource requirement, the network resource requirement, and the betweenness centrality keep unchanged, and the ranking score increases with an increase in the degree centrality.

In this embodiment of this application, the ranking score of each component node is determined according to the computing resource requirement and the network resource requirement of each component node, and the betweenness centrality and the degree centrality of each component node in the logical network, that is, a ranking score of a component node can represent a resource requirement of the component node and an importance degree of the component node in the network; and physical nodes to which all the component nodes are mapped are successively determined according to a descending order of ranking scores. In this way, a physical node to which a relatively important component node having a relatively high resource requirement in a service is mapped can be preferentially determined. Compared with the prior art, in this embodiment, a service deployment solution can be effectively optimized, a service resource requirement can be better meet, and utilization of overall resources in a physical cluster can be improved.

Specifically, a ranking score $Value_{vir}(v)$ of a second component node $v$ in the to-be-deployed service is determined according to the following formula:

$$Value_{vir}(v) = \left( \alpha CPU(v) + \beta RAM(v) + \gamma \sum\nolimits_{i=1}^{c} BW_i(v) \right) \cdot \frac{s(v)}{S} \cdot D(v) \quad (2)$$

where $CPU(v)$ represents a CPU resource requirement of the second component node $v$, $RAM(v)$ represents a RAM resource requirement of the second component node $v$, $\sum\nolimits_{i=1}^{c} BW_i(v)$ represents a network bandwidth resource requirement of the second component node $v$, $BW_i(v)$ represents a network bandwidth resource requirement of an $i^{th}$ logical link connected to the second component node $v$, $c$ is a total quantity of logical links connected to the second component node $v$, $s(v)$ represents a quantity of shortest paths that are between all component node pairs in the logical network and that pass through the second component node $v$, $S$ represents a total quantity of shortest paths between all the component node pairs in the logical network, $\frac{s(v)}{S}$ is used to represent betweenness centrality of the second component node $v$ in the logical network, and $D(v)$ is degree centrality of the second component node $v$ in the logical network, where $\alpha$, $\beta$, and $\gamma$ are weights, a value range of $\alpha$, $\beta$, and $\gamma$ is 0 to 1, and a sum of $\alpha$, $\beta$, and $\gamma$ is equal to 1.

It should be understood that Formula (2) is only used as an embodiment for calculating the ranking score of the second component node, and does not limit the protection scope of this embodiment of this application. In actual application, another algorithm or formula that can be used to calculate a ranking score of a component node based on a computing resource, a network resource, closeness centrality, and degree centrality may be designed. This is not limited in this embodiment of this application.

In the foregoing description, the solution of calculating a ranking score of a component node is described by using the second component node as an example with reference to embodiment of Formula (2). It should be understood that, the algorithm shown in Formula (2) is applicable to each component node in the to-be-deployed service, that is, the second component node is used to represent each component node in the to-be-deployed service.

It should be further understood that the first component node and the second component node are only used for differentiation for ease of description, and are not used to limit the scope of this embodiment of this application.

It should be further understood that, the to-be-deployed service may include component nodes with a dependency relationship, for example, some component nodes may be deployed only after other components are deployed. In other words, different component nodes in a to-be-deployed service may have different priorities. In this case, a component node with a high priority needs to be preferentially deployed.

Optionally, in a possible embodiment, step 112 of determining, according to the deployment order of all the nodes, the first component node that needs to be deployed currently includes:

adjusting the deployment order of all the nodes according to priority information of all the component nodes in the to-be-deployed service; and
determining, according to an adjusted deployment order of all the nodes, the first component node that needs to be deployed currently.

For example, the to-be-deployed service includes five nodes A, B, C, D, and E. Assuming that a deployment order determined according to ranking scores is A-B-C-D-E, but a priority of the node D is higher than that of the node B, an adjusted deployment order is A-D-B-C-E, and the first component node that needs to be deployed currently is determined based on the adjusted deployment order A-D-B-C-E.

The to-be-deployed service may include component nodes with an affinity or anti-affinity. That a group of component nodes has an affinity means that it is required that the group of component nodes be deployed on a same physical node, that is, it is required that physical nodes to which the group of component nodes is mapped be a same physical node. Correspondingly, that a group of component nodes has anti-affinity means that deployment of the group of component nodes on a same physical node is prohibited.

Optionally, in some embodiments, the first component node is a logical combined node of a plurality of component nodes that are in the to-be-deployed service and that are required to be deployed on a same physical node.

Specifically, the plurality of component nodes required to be deployed on the same physical node are logically combined into a new component node that may be referred to as a logical combined node. Correspondingly, a logical network topology of the to-be-deployed service is updated, and the logical combined node is then deployed.

It should be understood that the physical node set is also determined according to a computing resource requirement of the logical combined node in step 120.

Optionally, in some embodiments, a third component node is a component node that has been deployed in the to-be-deployed service, and deployment of the first component node and the third component node on a same physical node is prohibited.

Step 120 of obtaining, from a physical cluster, a physical node set that meets a computing resource requirement of the first component node includes: obtaining the physical node set from the physical cluster from which a physical node to which the third component node is mapped is deleted.

Optionally, the physical node set that meets the computing resource requirement of the first component node may alternatively be obtained from the original physical cluster; and then, a physical node to which the third component node is mapped is deleted from the physical node set, and a subsequent step is performed based on the physical node set from which the physical node to which the third component node is mapped is deleted.

The foregoing describes, with reference to FIG. 4, FIG. 5, and FIG. 6, a component node deployment process, that is, a node mapping process, in a service deployment process. It should be understood that the service deployment process includes two processes: a node mapping process and a link mapping process. Therefore, after a component node in a service is deployed, that is, after corresponding physical nodes to which all component nodes are mapped are determined, a logical link also needs to be deployed. The logical link is a virtual link between component nodes in the to-be-deployed service.

Specifically, for example, the logical link is deployed by using a k-shortest path algorithm. For each logical link in the to-be-deployed service, all physical links that meet a network resource requirement (that is, a network bandwidth requirement) are searched for a reachable physical path. For example, on a logical link 1 between a component node 1 and a component node 2, a physical path 1 that meets a bandwidth requirement of the logical link 1 is found from a physical network topology in which there are a physical node 1 to which the component node 1 is mapped and a physical node 2 to which the component node 2 is mapped, and the logical link 1 is deployed on the physical path 1.

In a cloud distributed environment, a network topology of a physical cluster may be a special simple topology, for example, a tree topology. In this case, a physical path between physical nodes is fixed. Therefore, in a service deployment process, only mapping a component node to a physical node is performed, and subsequently, link deployment is complete by configuring corresponding service data routing. That is, overall service deployment is complete, and there is no need to use the k-shortest path algorithm.

In a process of cloud distributed cluster resource scheduling, a plurality of to-be-deployed services may be deployed in one time window. In this case, a deployment order of the plurality of services needs to be determined.

Optionally, in a possible embodiment, the method 100 further includes: obtaining a plurality of to-be-deployed services; determining a service gain of each service according to a computing resource requirement and a network resource requirement of each of the plurality of services; and determining the to-be-deployed service according to a descending order of service gains of all of the plurality of services.

Specifically, a computing resource requirement of a service is a sum of computing resource requirements of all component nodes in the service, a network resource requirement of the service is a sum of computing resource requirements of all the component nodes in the service, and a service gain of the service may be a quantized value of a sum of the computing resource requirement and the network resource requirement of the service.

It should be understood that, compared with a service having a lower resource requirement, a service having a higher resource requirement means higher payment, and the service with higher payment should be preferentially deployed. In addition, resources in an underlying physical resource pool are limited, and are gradually occupied with expansion of service deployment. In a same batch of services, a preferentially deployed service has more sufficient available resources and more flexible deployable locations in a cluster. Therefore, in this embodiment of this application, the service having the higher resource requirement is preferentially deployed. This can implement appropriate service deployment and improve utilization of overall resources in a physical cluster.

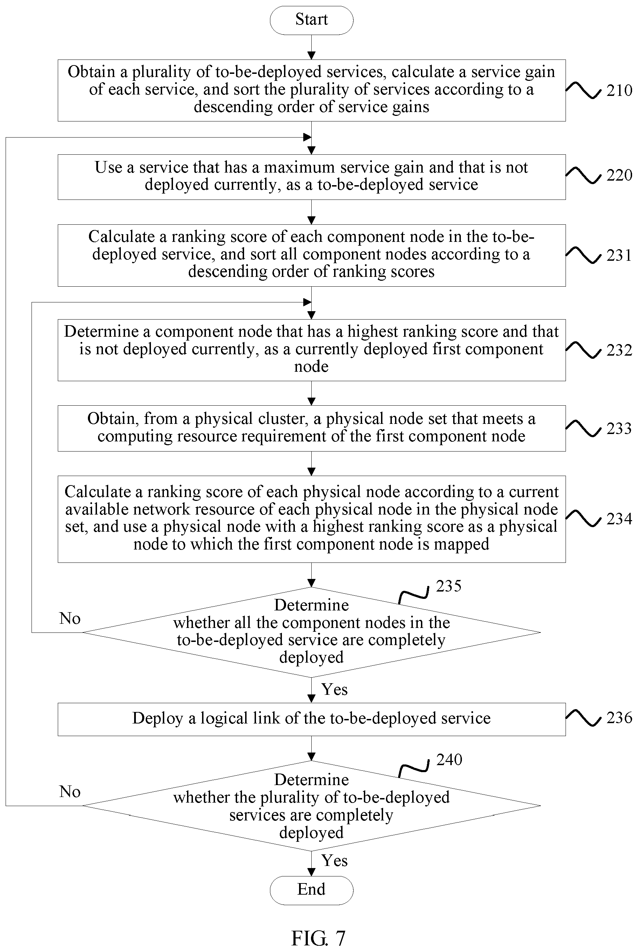

To better understand the service deployment method in this embodiment of this application, the following describes, with reference to FIG. 7, a service deployment method 200 provided in an embodiment of this application. As shown in FIG. 7, the method 200 includes the following steps.

210. Obtain a plurality of to-be-deployed services, calculate a service gain of each service according to a computing resource requirement and a network resource requirement of each service, and sort the plurality of services according to a descending order of service gains.

The plurality of to-be-deployed services may be obtained by triggering cloud distributed cluster resource scheduling. For example, cloud distributed cluster resource scheduling is triggered by setting a preset condition. For example, the preset condition is to trigger cloud distributed cluster scheduling periodically. Alternatively, the preset condition is to trigger cloud distributed cluster scheduling when there is a typical event. For example, cloud distributed cluster resource scheduling needs to be immediately triggered when a high-priority service is deployed.

Specifically, a service gain of a service is calculated according to a computing resource requirement and a network resource requirement of each component node in the service. The computing resource requirement includes a CPU resource requirement and a RAM resource requirement, and the network resource requirement includes a network bandwidth requirement and the like.

220. Use a service that has a maximum service gain and that is not deployed currently, as a to-be-deployed service.

231. Calculate a ranking score of each component node in the to-be-deployed service, and sort all component nodes according to a descending order of ranking scores.

Specifically, a ranking score of a component node is calculated according to a computing resource requirement and a network resource requirement of the component node. More specifically, the ranking score of each component node in the to-be-deployed service is calculated by using Formula (2). For details, refer to the foregoing description, and details are not further described herein again.

232. Determine a component node that has a highest ranking score and that is not deployed currently, as a currently deployed first component node.

233. Obtain, from a physical cluster, a physical node set that meets a computing resource requirement of the first component node.

234. Calculate a ranking score of each physical node according to a current available network resource of each physical node in the physical node set, and use a physical node with a highest ranking score as a physical node to which the first component node is mapped.

Specifically, for example, the ranking score of each physical node is calculated by using Formula (1). For details, refer to the foregoing description, and details are not further described herein again.

235. Determine whether all the component nodes in the to-be-deployed service are completely deployed; if yes, perform step 236; and if no, perform step 232.

236. Deploy a logical link of the to-be-deployed service.

Specifically, the logical link is a virtual link between component nodes in the to-be-deployed service. The deploying the logical link is to determine a physical link to which the logical link is mapped. For example, the logical link is deployed by using a k-shortest path algorithm. Specifically, on a logical link, all physical links that meet a network bandwidth requirement of the logical link are searched for a reachable physical path, and the logical link is then deployed on the physical path.

It should be understood that, if no reachable physical path that meets a network bandwidth requirement of a logical link is found on the logical link, a current service deployment task fails.

240. Determine whether the plurality of to-be-deployed services are completely deployed; if yes, the process ends; and if no, perform step 220.

Therefore, according to this embodiment of this application, in a node mapping process of service deployment, that is, in a process of determining a physical node to which a component node is mapped, a computing resource and a network resource are comprehensively considered. Compared with an existing service deployment solution, this embodiment can avoid a network resource allocation conflict and local overload of a physical link to some extent. Therefore, a service resource requirement can be better met.

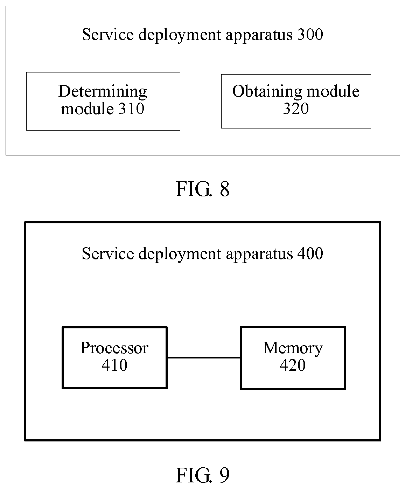

The foregoing describes, with reference to FIG. 4 to FIG. 7, the service deployment method according to the embodiments of this application. The following describes, with reference to FIG. 8 and FIG. 9, a service deployment apparatus according to embodiments of this application.

FIG. 8 shows a schematic block diagram of a service deployment apparatus 300 according to an embodiment of this application. The apparatus 300 includes:

a determining module 310, configured to determine a first component node that needs to be deployed currently in a to-be-deployed service; and

an obtaining module 320, configured to obtain, from a physical cluster, a physical node set that meets a computing resource requirement of the first component node determined by the determining module 510, where

the obtaining module 320 is further configured to obtain, from the physical node set according to a current available network resource of each physical node in the physical node set, a physical node to which the first component node is mapped.

**EP 3 554 009 A1**

According to this embodiment of this application, in a node mapping process of service deployment, that is, in a process of determining a physical node to which a component node is mapped, a computing resource and a network resource are comprehensively considered. Compared with an existing service deployment solution, this embodiment can avoid a network resource allocation conflict and local overload of a physical link to some extent. Therefore, a service resource requirement can be better met.

Optionally, in a possible embodiment, the obtaining module 320 is configured to obtain, from the physical node set according to the current available network resource of each physical node, closeness centrality of each physical node in the physical cluster, and a degree of association between each physical node and a physical node of a component node that has been deployed in the to-be-deployed service, the physical node to which the first component node is mapped.

Optionally, in a possible embodiment, the obtaining module 320 is configured to: determine a ranking score of each physical node according to the current available network resource of each physical node, the closeness centrality of each physical node in the physical cluster, and the degree of association between each physical node and the physical node of the component node that has been deployed in the to-be-deployed service, where the ranking score of each physical node is positively correlated with the current available network resource, the closeness centrality, and the degree of association of each physical node; and determine a physical node with a highest ranking score in the physical node set as the physical node to which the first component node is mapped.

Optionally, in a possible embodiment, the obtaining module 320 is configured to calculate a ranking score $Value_{phy}(p_i)$ of a first physical node $p_i$ in the physical node set according to the following formula:

$$Value_{phy}\left(p_i\right) = \frac{\sum_{j=1}^{n}\left(cpu_{p_j} \cdot ram_{p_j} \cdot Minbw\left(p_i, p_j\right)\right)}{\sum_{j=1}^{n} d\left(p_i, p_j\right)} \cdot \mu^{\frac{\sum_{k=1}^{m} Minbw\left(p_i, p_k\right)}{\sum_{k=1}^{m} d\left(p_i, p_k\right)}},$$

where $Minbw(p_i, p_j)$ represents a current available network bandwidth resource between the first physical node $p_i$ and a second physical node $p_j$ in the physical cluster, $d(p_i, p_j)$ represents a quantity of hops of a shortest path from the first physical node $p_i$ to the second physical node $p_j$, $j$ is 1, ..., n, and n is a quantity of physical nodes in the physical cluster; when the first physical node $p_i$ and the second physical node $p_j$ are a same physical node, $Minbw(p_i, p_j)$ has a value of 0, and $d(p_i, p_j)$ has a value of 1; and $cpu_{pj}$ represents a current available central processing unit CPU resource of the second physical node $p_j$, $ram_{pj}$ represents a current available random access memory RAM resource of the second physical node $p_j$, $p_k$ represents a physical node to which a component node that has been deployed in the to-be-deployed service and that has a logical link to the currently deployed first component node is mapped, m is a quantity of physical nodes to which the component node that has been deployed in the to-be-deployed service and that has the logical link to the currently deployed first component node are mapped, and $\mu$ is a constant greater than or equal to 1.

Optionally, in a possible embodiment, the determining module 310 includes:

a first determining unit, configured to determine a deployment order of all component nodes in the to-be-deployed service according to a computing resource requirement and a network resource requirement of each component node in the to-be-deployed service; and
a second determining unit, configured to determine, according to the deployment order of all the component nodes that is determined by the first determining unit, the first component node that needs to be deployed currently.

Optionally, in a possible embodiment, the first determining unit is configured to determine the deployment order of all the component nodes according to the computing resource requirement and the network resource requirement of each component node, and betweenness centrality and degree centrality of each component node in a logical network corresponding to the to-be-deployed service.

Optionally, in a possible embodiment, the first determining unit is configured to: determine a ranking score of each component node according to the computing resource requirement and the network resource requirement of each component node, and the betweenness centrality and the degree centrality of each component node in the logical network, where the ranking score of each component node is positively correlated with the computing resource requirement, the network resource requirement, the betweenness centrality, and the degree centrality of each component node; and determine the deployment order of all the component nodes according to a descending order of ranking scores of all the component nodes in the to-be-deployed service.

Optionally, in a possible embodiment, the first determining unit is configured to determine a ranking score $Value_{vir}(v)$ of a second component node $v$ in the to-be-deployed service according to the following formula:

13

$$Value_{vir}(v) = \left( \alpha CPU(v) + \beta RAM(v) + \gamma \sum_{i=1}^{c} BW_i(v) \right) \cdot \frac{s(v)}{S} \cdot D(v),$$

where $CPU(v)$ represents a CPU resource requirement of the second component node $v$, $RAM(v)$ represents a RAM resource requirement of the second component node $v$, $\sum_{i=1}^{c} BW_i(v)$ represents a network bandwidth resource requirement of the second component node $v$, $BW_i(v)$ represents a network bandwidth resource requirement of an $i^{th}$ logical link connected to the second component node $v$, $c$ is a total quantity of logical links connected to the second component node $v$, $s(v)$ represents a quantity of shortest paths that are between all component node pairs in the logical network and that pass through the second component node $v$, $S$ represents a total quantity of shortest paths between all the component node pairs in the logical network, $\frac{s(v)}{S}$ is used to represent betweenness centrality of the second component node $v$ in the logical network, and $D(v)$ is degree centrality of the second component node $v$ in the logical network, where $\alpha$, $\beta$, and $\gamma$ are weights.

Optionally, in a possible embodiment, the second determining unit is configured to: adjust the deployment order of all the nodes according to priority information of all the component nodes in the to-be-deployed service; and determine, according to an adjusted deployment order of all the nodes, the first component node that needs to be deployed currently.

Optionally, in a possible embodiment, the first component node is a logical combined node of a plurality of component nodes that are in the to-be-deployed service and that are required to be deployed on a same physical node.

Optionally, in a possible embodiment, a third component node is a component node that has been deployed in the to-be-deployed service, and deployment of the first component node and the third component node on a same physical node is prohibited, where

the obtaining module 320 is configured to obtain the physical node set from the physical cluster from which a physical node to which the third component node is mapped is deleted.

Optionally, in a possible embodiment, the obtaining module 320 is further configured to obtain a plurality of to-be-deployed services;

the determining module 310 is further configured to determine a service gain of each service according to a computing resource requirement and a network resource requirement of each of the plurality of services obtained by the obtaining module 320; and

the determining module 310 is further configured to determine the to-be-deployed service according to a descending order of service gains of all of the plurality of services.

Specifically, both the determining module 310 and the obtaining module 320 in this embodiment of this application may be implemented by using a processor or a processor-related circuit.

It should be understood that, the service deployment apparatus 300 shown in FIG. 8 may be configured to perform the service deployment method 100 or method 200 shown above, and the foregoing and other operations and/or functions of the modules in the apparatus 300 are intended to implement the corresponding procedures of the methods shown in FIG. 4 to FIG. 7. For brevity, details are not described herein again.

FIG. 9 is a schematic block diagram of a service deployment apparatus 400 according to an embodiment of this application. The apparatus 400 includes a processor 410 and a memory 420. The processor 410 and the memory 420 communicate with each other by using an internal connection path, the memory 420 is configured to store an instruction, and the processor 410 is configured to execute the instruction stored in the memory 420, where the processor 410 executes the instruction stored in the memory 420, to enable the processor 410 to be configured to: determine a first component node that needs to be deployed currently in a to-be-deployed service; obtain, from a physical cluster, a physical node set that meets a computing resource requirement of the first component node; and obtain, from the physical node set according to a current available network resource of each physical node in the physical node set, a physical node to which the first component node is mapped.

According to this embodiment of this application, in a node mapping process of service deployment, that is, in a process of determining a physical node to which a component node is mapped, a computing resource and a network resource are comprehensively considered. Compared with an existing service deployment solution, this embodiment can avoid a network resource allocation conflict and local overload of a physical link to some extent. Therefore, a service resource requirement can be better met.

Optionally, in a possible embodiment, the processor 410 is configured to obtain, from the physical node set according to the current available network resource of each physical node, closeness centrality of each physical node in the physical cluster, and a degree of association between each physical node and a physical node of a component node that has been deployed in the to-be-deployed service, the physical node to which the first component node is mapped.

Optionally, in a possible embodiment, the processor 410 is configured to: determine a ranking score of each physical node according to the current available network resource of each physical node, the closeness centrality of each physical node in the physical cluster, and the degree of association between each physical node and the physical node of the component node that has been deployed in the to-be-deployed service, where the ranking score of each physical node is positively correlated with the current available network resource, the closeness centrality, and the degree of association of each physical node; and determine a physical node with a highest ranking score in the physical node set as the physical node to which the first component node is mapped.

Optionally, in a possible embodiment, the processor 410 is configured to calculate a ranking score $Value_{phy}(p_i)$ of a first physical node $p_i$ in the physical node set according to the following formula:

$$Value_{phy}\left(p_i\right) = \frac{\sum_{j=1}^{n}\left(cpu_{p_j} \cdot ram_{p_j} \cdot Minbw\left(p_i, p_j\right)\right)}{\sum_{j=1}^{n} d\left(p_i, p_j\right)} \cdot \mu^{\frac{\sum_{k=1}^{m} Minbw\left(p_i, p_k\right)}{\sum_{k=1}^{m} d\left(p_i, p_k\right)}},$$

where $Minbw(p_i, p_j)$ represents a current available network bandwidth resource between the first physical node $p_i$ and a second physical node $p_j$ in the physical cluster, $d(p_i, p_j)$ represents a quantity of hops of a shortest path from the first physical node $p_i$ to the second physical node $p_j$, $j$ is 1, ..., $n$, and $n$ is a quantity of physical nodes in the physical cluster; when the first physical node $p_i$ and the second physical node $p_j$ are a same physical node, $Minbw(p_i, p_j)$ has a value of 0, and $d(p_i, p_j)$ has a value of 1; and $cpu_{pj}$ represents a current available central processing unit CPU resource of the second physical node $p_j$, $ram_{pj}$ represents a current available random access memory RAM resource of the second physical node $p_j$, $p_k$ represents a physical node to which a component node that has been deployed in the to-be-deployed service and that has a logical link to the currently deployed first component node is mapped, $m$ is a quantity of physical nodes to which the component node that has been deployed in the to-be-deployed service and that has the logical link to the currently deployed first component node are mapped, and $\mu$ is a constant greater than or equal to 1.

Optionally, in a possible embodiment, the processor 410 is configured to: determine a deployment order of all component nodes in the to-be-deployed service according to a computing resource requirement and a network resource requirement of each component node in the to-be-deployed service; and determine, according to the deployment order of all the nodes, the first component node that needs to be deployed currently.

Optionally, in a possible embodiment, the processor 410 is configured to determine the deployment order of all the component nodes according to the computing resource requirement and the network resource requirement of each component node, and betweenness centrality and degree centrality of each component node in a logical network corresponding to the to-be-deployed service.

Optionally, in a possible embodiment, the processor 410 is configured to: determine a ranking score of each component node according to the computing resource requirement and the network resource requirement of each component node, and the betweenness centrality and the degree centrality of each component node in the logical network, where the ranking score of each component node is positively correlated with the computing resource requirement, the network resource requirement, the betweenness centrality, and the degree centrality of each component node; and determine the deployment order of all the component nodes according to a descending order of ranking scores of all the component nodes in the to-be-deployed service.

Optionally, in a possible embodiment, the processor 410 is configured to determine a ranking score $Value_{vir}(v)$ of a second component node $v$ in the to-be-deployed service according to the following formula:

$$Value_{vir}\left(v\right) = \left(\alpha CPU\left(v\right) + \beta RAM\left(v\right) + \gamma \sum_{i=1}^{c} BW_i\left(v\right)\right) \cdot \frac{s(v)}{S} \cdot D\left(v\right) \qquad (2)$$

where $CPU(v)$ represents a CPU resource requirement of the second component node $v$, $RAM(v)$ represents a RAM resource requirement of the second component node $v$, $\sum_{i=1}^{c} BW_i\left(v\right)$ represents a network bandwidth resource requirement of the second component node $v$, $BW_i(v)$ represents a network bandwidth resource requirement of an $i^{th}$ logical link connected to the second component node $v$, $c$ is a total quantity of logical links connected to the second component node $v$, $s(v)$ represents a quantity of shortest paths that are between all component node pairs in the logical network and that pass through the second component node $v$, $S$ represents a total quantity of shortest paths between all the component node pairs in the logical network, $\dfrac{s(v)}{S}$ is used to represent betweenness centrality of the second component node $v$ in the logical network, and $D(v)$ is degree centrality of the second component node $v$ in the logical network, where $\alpha$, $\beta$, and $\gamma$ are weights.

Optionally, in a possible embodiment, the processor 410 is configured to: adjust the deployment order of all the nodes according to priority information of all the component nodes in the to-be-deployed service; and determine, according to an adjusted deployment order of all the nodes, the first component node that needs to be deployed currently.

Optionally, in a possible embodiment, the first component node is a logical combined node of a plurality of component nodes that are in the to-be-deployed service and that are required to be deployed on a same physical node.

Optionally, in a possible embodiment, a third component node is a component node that has been deployed in the to-be-deployed service, and deployment of the first component node and the third component node on a same physical node is prohibited, where the processor 410 is configured to obtain the physical node set from the physical cluster from which a physical node to which the third component node is mapped is deleted.

Optionally, in a possible embodiment, the processor 410 is configured to: obtain a plurality of to-be-deployed services; determine a service gain of each service according to a computing resource requirement and a network resource requirement of each of the plurality of services; and determine the to-be-deployed service according to a descending order of service gains of all service in the plurality of services.

It should be understood that in this embodiment of this application, the processor 410 may be a central processing unit (Central Processing Unit, CPU). The processor 410 may alternatively be another general purpose processor, a digital signal processor (Digital Signal Processor, DSP), an application-specific integrated circuit (Application Specific Integrated Circuit, ASIC), a field-programmable gate array (Field-Programmable Gate Array, FPGA) or another programmable logic device, a discrete gate or a transistor logic device, a discrete hardware component, or the like. The general purpose processor may be a microprocessor, or the processor may also be any conventional processor or the like.

The memory 420 may include a read-only memory and a random access memory, and provide an instruction and data to the processor 410. Apart of the memory 420 may further include a non-volatile random access memory. For example, the memory 420 may further store device type information.

In an implementation process, the steps of the foregoing methods may be implemented by an integrated logical circuit of hardware in the processor 410, or by a software instruction. The steps of the methods disclosed with reference to the embodiments of this application may be directly implemented by a hardware processor, or may be implemented by a combination of hardware and a software module in a processor. The software module may be in a random-access memory, a flash memory, a read-only memory, a programmable read-only memory or an electrically erasable programmable memory, a register, or another mature storage medium in the art. The storage medium is located in the memory 420, and the processor 410 reads information from the memory 420 and implements the steps of the foregoing methods in combination with its hardware. To avoid repetition, details are not described herein again.

It should be understood that, the service deployment apparatus 400 according to this embodiment of this application may be configured to perform the service deployment method according to the embodiments of this application, and may be corresponding to the service deployment apparatus 300 according to the embodiment of this application. In addition, the foregoing and other operations and/or functions of the modules in the apparatus 400 are intended to implement the corresponding procedures of the methods shown in FIG. 4 to FIG. 7. For brevity, details are not described herein again.

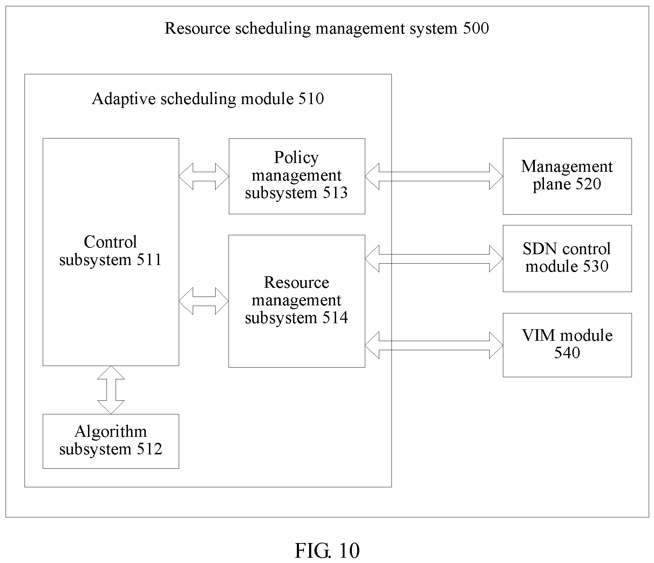

As shown in FIG. 10, an embodiment of this application further provides a resource scheduling management system 500, configured to perform the service deployment method in the foregoing embodiment of this application. The resource scheduling management system 500 includes an adaptive scheduling module 510, a management plane 520, a software defined network (Software Defined Network, SDN) control module 530, and a virtualized infrastructure management (virtual infrastructure management, VIM) module 540. The adaptive scheduling module 510 includes a control subsystem 511, an algorithm subsystem 512, a policy management subsystem 513, and a resource management subsystem 514.

The management plane 520 is configured to: initiate a command to deploy a service, and send a resource requirement of a to-be-deployed service to the adaptive scheduling module 510.

The resource management subsystem 514 in the adaptive scheduling module 510 is configured to obtain, from the SDN control module 530 and the VIM module 540, resource requirement information and resource supply information that include CPU information, memory information, a network topology, a cost matrix, a traffic matrix, and the like.

The control subsystem 511 is configured to select an appropriate scheduling policy and algorithm (which may also be referred to as an initial service deployment method) according to the resource requirement information and the resource supply information that are collected by the resource management subsystem 514.

The algorithm subsystem 512 is configured to: obtain the scheduling policy and algorithm from the control subsystem 511, perform calculation according to the scheduling policy and algorithm (that is, input information), and return location information of a corresponding physical node and a carrier link selection of corresponding service traffic. The physical node is, for example, a virtual machine or a container.

Specifically, the foregoing calculation process may be performed by using a converged deployment algorithm in the algorithm subsystem.

It should be understood that steps 231 to 236 in FIG. 7 may be performed by the algorithm subsystem 512.

The policy management subsystem 513 is configured to orchestrate and execute a component node deployment suggestion.

To sum up, according to this embodiment of this application, in a node mapping process of service deployment, that is, in a process of determining a physical node to which a component node is mapped, a computing resource and a network resource are comprehensively considered. Compared with an existing service deployment solution, this embodiment can avoid a network resource allocation conflict and local overload of a physical link to some extent. Therefore, a service resource requirement can be better met.

It should be understood that sequence numbers of the foregoing processes do not mean execution orders in various embodiments. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is only an example. For example, the unit division is only logical function division and may be other division in actual implementation. For example, a plurality of units or components may be combined or integrated into another system, or some features may be ignored or not performed. In addition, the deployed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts deployed as units may or may not be physical units, may be located in one position, or may be distributed on a plurality of network units. Some or all of the units may be selected according to actual requirements to achieve the objectives of the solutions of the embodiments.

In addition, functional units in the embodiments may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are only specific implementations of the embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A service deployment method, comprising:

    determining a first component node that needs to be deployed currently in a to-be-deployed service;
    obtaining, from a physical cluster, a physical node set that meets a computing resource requirement of the first component node; and

obtaining, from the physical node set according to a current available network resource of each physical node in the physical node set, a physical node to which the first component node is mapped.

2. The method according to claim 1, wherein the obtaining, from the physical node set, a physical node to which the first component node is mapped comprises:

obtaining, from the physical node set according to the current available network resource of each physical node, closeness centrality of each physical node in the physical cluster, and a degree of association between each physical node and a physical node of a component node that has been deployed in the to-be-deployed service, the physical node to which the first component node is mapped.

3. The method according to claim 2, wherein the obtaining, from the physical node set, the physical node to which the first component node is mapped comprises:

determining a ranking score of each physical node according to the current available network resource of each physical node, the closeness centrality of each physical node in the physical cluster, and the degree of association between each physical node and the physical node of the component node that has been deployed in the to-be-deployed service, wherein the ranking score of each physical node is positively correlated with the current available network resource, the closeness centrality, and the degree of association of each physical node; and determining a physical node with a highest ranking score in the physical node set as the physical node to which the first component node is mapped.

4. The method according to claim 3, wherein the determining a ranking score of each physical node according to the current available network resource of each physical node, the closeness centrality of each physical node in the physical cluster, and the degree of association between each physical node and the physical node of the component node that has been deployed in the to-be-deployed service comprises:

calculating a ranking score $Value_{phy}(p_i)$ of a first physical node $p_i$ in the physical node set according to the following formula:

$$Value_{phy}\left(p_i\right) = \frac{\sum_{j=1}^{n}\left(cpu_{p_j} \cdot ram_{p_j} \cdot Minbw\left(p_i, p_j\right)\right)}{\sum_{j=1}^{n}d\left(p_i, p_j\right)} \cdot \mu^{\frac{\sum_{k=1}^{m}Minbw\left(p_i, p_k\right)}{\sum_{k=1}^{m}d\left(p_i, p_k\right)}},$$

wherein $Minbw(p_i, p_j)$ represents a current available network bandwidth resource between the first physical node $p_i$ and a second physical node $p_j$ in the physical cluster, $d(p_i, p_j)$ represents a quantity of hops of a shortest path from the first physical node $p_i$ to the second physical node $p_j$, $j$ is 1, ..., $n$, and $n$ is a quantity of physical nodes in the physical cluster; when the first physical node $p_i$ and the second physical node $p_j$ are a same physical node, $Minbw(p_i, p_j)$ has a value of 0, and $d(p_i, p_j)$ has a value of 1; and $cpu_{pj}$ represents a current available central processing unit CPU resource of the second physical node $p_j$, $ram_{pj}$ represents a current available random access memory RAM resource of the second physical node $p_j$, $p_k$ represents a physical node to which a component node that has been deployed in the to-be-deployed service and that has a logical link to the currently deployed first component node is mapped, $m$ is a quantity of physical nodes to which the component node that has been deployed in the to-be-deployed service and that has the logical link to the currently deployed first component node are mapped, and $\mu$ is a constant greater than or equal to 1.

5. The method according to any one of claims 1 to 4, wherein the determining a first component node that needs to be deployed currently in a to-be-deployed service comprises:

determining a deployment order of all component nodes in the to-be-deployed service according to a computing resource requirement and a network resource requirement of each component node in the to-be-deployed service; and

determining, according to the deployment order of all the nodes, the first component node that needs to be deployed currently.

6. The method according to claim 5, wherein the determining a deployment order of all component nodes in the to-be-deployed service according to a computing resource requirement and a network resource requirement of each component node in the to-be-deployed service comprises:
determining the deployment order of all the component nodes according to the computing resource requirement and the network resource requirement of each component node, and betweenness centrality and degree centrality of each component node in a logical network corresponding to the to-be-deployed service.

**7.** The method according to claim 6, wherein the determining the deployment order of all the component nodes according to the computing resource requirement and the network resource requirement of each component node, and betweenness centrality and degree centrality of each component node in a logical network corresponding to the to-be-deployed service comprises:

determining a ranking score of each component node according to the computing resource requirement and the network resource requirement of each component node, and the betweenness centrality and the degree centrality of each component node in the logical network corresponding to the to-be-deployed service, wherein the ranking score of each component node is positively correlated with the computing resource requirement, the network resource requirement, the betweenness centrality, and the degree centrality of each component node; and
determining the deployment order of all the component nodes according to a descending order of ranking scores of all the component nodes in the to-be-deployed service.

**8.** The method according to claim 7, wherein the determining a ranking score of each component node according to the computing resource requirement and the network resource requirement of each component node, and the betweenness centrality and the degree centrality of each component node in the logical network comprises:
determining a ranking score $Value_{vir}(v)$ of a second component node $v$ in the to-be-deployed service according to the following formula:

$$ Value_{vir}(v) = \left( \alpha CPU(v) + \beta RAM(v) + \gamma \sum\nolimits_{i=1}^{c} BW_i(v) \right) \cdot \frac{s(v)}{S} \cdot D(v), $$

wherein $CPU(v)$ represents a CPU resource requirement of the second component node $v$, $RAM(v)$ represents a RAM resource requirement of the second component node $v$, $\sum_{i=1}^{c} BW_i(v)$ represents a network bandwidth resource requirement of the second component node $v$, $BW_i(v)$ represents a network bandwidth resource requirement of an $i^{th}$ logical link connected to the second component node $v$, $c$ is a total quantity of logical links connected to the second component node $v$, $s(v)$ represents a quantity of shortest paths that are between all component node pairs in the logical network and that pass through the second component node $v$, $S$ represents a total quantity of shortest paths between all the component node pairs in the logical network, $\frac{s(v)}{S}$ is used to represent betweenness centrality of the second component node $v$ in the logical network, and $D(v)$ is degree centrality of the second component node $v$ in the logical network, wherein $\alpha$, $\beta$, and $\gamma$ are weights.

**9.** The method according to any one of claims 5 to 8, wherein the determining, according to the deployment order of all the nodes, the first component node that needs to be deployed currently comprises:

adjusting the deployment order of all the nodes according to priority information of all the component nodes in the to-be-deployed service; and
determining, according to an adjusted deployment order of all the nodes, the first component node that needs to be deployed currently.

**10.** The method according to any one of claims 1 to 9, wherein the first component node is a logical combined node of a plurality of component nodes that are in the to-be-deployed service and that are required to be deployed on a same physical node.

**11.** The method according to any one of claims 1 to 10, wherein a third component node is a component node that has been deployed in the to-be-deployed service, and deployment of the first component node and the third component node on a same physical node is prohibited, wherein

the obtaining, from a physical cluster, a physical node set that meets a computing resource requirement of the first component node comprises:
obtaining the physical node set from the physical cluster from which a physical node to which the third component node is mapped is deleted.

12. The method according to any one of claims 1 to 11, wherein the method further comprises:

obtaining a plurality of to-be-deployed services;
determining a service gain of each service according to a computing resource requirement and a network resource requirement of each of the plurality of services; and
determining the to-be-deployed service according to a descending order of service gains of all of the plurality of services.

13. A service deployment apparatus, comprising:

a determining module, configured to determine a first component node that needs to be deployed currently in a to-be-deployed service; and
an obtaining module, configured to obtain, from a physical cluster, a physical node set that meets a computing resource requirement of the first component node determined by the determining module, wherein
the obtaining module is further configured to obtain, from the physical node set according to a current available network resource of each physical node in the physical node set, a physical node to which the first component node is mapped.

14. The apparatus according to claim 13, wherein the obtaining module is configured to obtain, from the physical node set according to the current available network resource of each physical node, closeness centrality of each physical node in the physical cluster, and a degree of association between each physical node and a physical node of a component node that has been deployed in the to-be-deployed service, the physical node to which the first component node is mapped.

15. The apparatus according to claim 14, wherein the obtaining module is configured to: determine a ranking score of each physical node according to the current available network resource of each physical node, the closeness centrality of each physical node in the physical cluster, and the degree of association between each physical node and the physical node of the component node that has been deployed in the to-be-deployed service, wherein the ranking score of each physical node is positively correlated with the current available network resource, the closeness centrality, and the degree of association of each physical node; and determine a physical node with a highest ranking score in the physical node set as the physical node to which the first component node is mapped.

16. The apparatus according to claim 15, wherein the obtaining module is configured to calculate a ranking score $Value_{phy}(p_i)$ of a first physical node $p_i$ in the physical node set according to the following formula:

$$Value_{phy}\left(p_i\right) = \frac{\sum_{j=1}^{n}\left(cpu_{p_j} \cdot ram_{p_j} \cdot Minbw\left(p_i, p_j\right)\right)}{\sum_{j=1}^{n} d\left(p_i, p_j\right)} \cdot \mu^{\frac{\sum_{k=1}^{m} Minbw\left(p_i, p_k\right)}{\sum_{k=1}^{m} d\left(p_i, p_k\right)}},$$

wherein $Minbw(p_i, p_j)$ represents a current available network bandwidth resource between the first physical node $p_i$ and a second physical node $p_j$ in the physical cluster, $d(p_i, p_j)$ represents a quantity of hops of a shortest path from the first physical node $p_i$ to the second physical node $p_j$, $j$ is 1, ..., $n$, and $n$ is a quantity of physical nodes in the physical cluster; when the first physical node $p_i$ and the second physical node $p_j$ are a same physical node, $Minbw(p_i, p_j)$ has a value of 0, and $d(p_i, p_j)$ has a value of 1; and $cpu_{pj}$ represents a current available central processing unit CPU resource of the second physical node $p_j$, $ram_{pj}$ represents a current available random access memory RAM resource of the second physical node $p_j$, $p_k$ represents a physical node to which a component node that has been deployed in the to-be-deployed service and that has a logical link to the currently deployed first component node is mapped, $m$ is a quantity of physical nodes to which the component node that has been deployed in the to-be-deployed service and that has the logical link to the currently deployed first component node are mapped, and $\mu$ is a constant greater than or equal to 1.

**17.** The apparatus according to any one of claims 13 to 16, wherein the determining module comprises:

a first determining unit, configured to determine a deployment order of all component nodes in the to-be-deployed service according to a computing resource requirement and a network resource requirement of each component node in the to-be-deployed service; and
a second determining unit, configured to determine, according to the deployment order of all the component nodes that is determined by the first determining unit, the first component node that needs to be deployed currently.

**18.** The apparatus according to claim 17, wherein the first determining unit is configured to determine the deployment order of all the component nodes according to the computing resource requirement and the network resource requirement of each component node, and betweenness centrality and degree centrality of each component node in a logical network corresponding to the to-be-deployed service.

**19.** The apparatus according to claim 18, wherein the first determining unit is configured to: determine a ranking score of each component node according to the computing resource requirement and the network resource requirement of each component node, and the betweenness centrality and the degree centrality of each component node in the logical network, wherein the ranking score of each component node is positively correlated with the computing resource requirement, the network resource requirement, the betweenness centrality, and the degree centrality of each component node; and determine the deployment order of all the component nodes according to a descending order of ranking scores of all the component nodes in the to-be-deployed service.

**20.** The apparatus according to claim 19, wherein the first determining unit is configured to determine a ranking score $Value_{vir}(v)$ of a second component node $v$ in the to-be-deployed service according to the following formula:

$$Value_{vir}(v) = \left(\alpha CPU(v) + \beta RAM(v) + \gamma \sum_{i=1}^{c} BW_i(v)\right) \cdot \frac{s(v)}{S} \cdot D(v),$$

wherein $CPU(v)$ represents a CPU resource requirement of the second component node $v$, $RAM(v)$ represents a RAM resource requirement of the second component node $v$, $\sum_{i=1}^{c} BW_i(v)$ represents a network bandwidth resource requirement of the second component node $v$, $BW_i(v)$ represents a network bandwidth resource requirement of an $i^{th}$ logical link connected to the second component node $v$, $c$ is a total quantity of logical links connected to the second component node $v$, $s(v)$ represents a quantity of shortest paths that are between all component node pairs in the logical network and that pass through the second component node $v$, $S$ represents a total quantity of shortest paths between all the component node pairs in the logical network, $\frac{s(v)}{S}$ is used to represent betweenness centrality of the second component node $v$ in the logical network, and $D(v)$ is degree centrality of the second component node $v$ in the logical network, wherein $\alpha$, $\beta$, and $\gamma$ are weights.

**21.** The apparatus according to any one of claims 17 to 20, wherein the second determining unit is configured to: adjust the deployment order of all the nodes according to priority information of all the component nodes in the to-be-deployed service; and determine, according to an adjusted deployment order of all the nodes, the first component node that needs to be deployed currently.

**22.** The apparatus according to any one of claims 13 to 21, wherein the first component node is a logical combined node of a plurality of component nodes that are in the to-be-deployed service and that are required to be deployed on a same physical node.

**23.** The apparatus according to any one of claims 13 to 22, wherein a third component node is a component node that has been deployed in the to-be-deployed service, and deployment of the first component node and the third component node on a same physical node is prohibited, wherein
the obtaining module is configured to obtain the physical node set from the physical cluster from which a physical node to which the third component node is mapped is deleted.

24. The apparatus according to any one of claims 13 to 23, wherein the obtaining module is further configured to obtain a plurality of to-be-deployed services;

the determining module is further configured to determine a service gain of each service according to a computing resource requirement and a network resource requirement of each of the plurality of services obtained by the obtaining module; and

the determining module is further configured to determine the to-be-deployed service according to a descending order of service gains of all of the plurality of services.

Service provider 2

Service 2

Service provider 1

Service 1

Infrastructure provider 1

Infrastructure provider 2

○ Physical node

● Component node

FIG. 1

User group A       User group B       User group C

| Logical network | Service provider 1 | Service provider 2 | Service provider 3 | Service provider k |
|---|---|---|---|---|

| Mapping system | Mapping algorithm 1 | Mapping algorithm 2 | Mapping algorithm 3 | Mapping algorithm m |
|---|---|---|---|---|

| Physical network | Infrastructure provider 1 | Infrastructure provider 2 | Infrastructure provider n |
|---|---|---|---|

FIG. 2

Cloud distributed system

Control node 1

Control node 2

Physical cluster 1

Physical cluster 2

Physical cluster 3

◯ Physical node (computing node)

FIG. 3

100

Determine a first component node that needs to be deployed currently in a to-be-deployed service ∿ 110

Obtain, from a physical cluster, a physical node set that meets a computing resource requirement of the first component node ∿ 120

Obtain, from the physical node set according to a current available network resource of each physical node in the physical node set, a physical node to which the first component node is mapped ∿ 130

FIG. 4

100

Determine a first component node that needs to be deployed currently in a to-be-deployed service ∿ 110

Obtain, from a physical cluster, a physical node set that meets a computing resource requirement of the first component node ∿ 120

Obtain, from the physical node set according to a current available network resource of each physical node in the physical node set, closeness centrality of each physical node in the physical cluster, and a degree of association between each physical node and a physical node of a component node that has been deployed in the to-be-deployed service, a physical node to which the first component node is mapped ∿ 131

FIG. 5

100

Determine a deployment order of all component nodes according to a computing resource requirement and a network resource requirement of each component node in a to-be-deployed service, and betweenness centrality and degree centrality of each component node in a logical network corresponding to the to-be-deployed service ∼ 111

Determine, according to the deployment order of all the component nodes, a first component node that needs to be deployed currently ∼ 112

Obtain, from a physical cluster, a physical node set that meets a computing resource requirement of the first component node ∼ 120

Obtain, from the physical node set according to a current available network resource of each physical node in the physical node set, closeness centrality of each physical node in the physical cluster, and a degree of association between each physical node and a physical node of a component node that has been deployed in the to-be-deployed service, a physical node to which the first component node is mapped ∼ 131

FIG. 6

Start

Obtain a plurality of to-be-deployed services, calculate a service gain of each service, and sort the plurality of services according to a descending order of service gains ～210

Use a service that has a maximum service gain and that is not deployed currently, as a to-be-deployed service ～220

Calculate a ranking score of each component node in the to-be-deployed service, and sort all component nodes according to a descending order of ranking scores ～231

Determine a component node that has a highest ranking score and that is not deployed currently, as a currently deployed first component node ～232

Obtain, from a physical cluster, a physical node set that meets a computing resource requirement of the first component node ～233

Calculate a ranking score of each physical node according to a current available network resource of each physical node in the physical node set, and use a physical node with a highest ranking score as a physical node to which the first component node is mapped ～234

235
Determine whether all the component nodes in the to-be-deployed service are completely deployed — No

Yes

Deploy a logical link of the to-be-deployed service ～236

240
Determine whether the plurality of to-be-deployed services are completely deployed — No

Yes

End

FIG. 7

Service deployment apparatus 300

| Determining module 310 | Obtaining module 320 |

FIG. 8

Service deployment apparatus 400

| Processor 410 | Memory 420 |

FIG. 9

Resource scheduling management system 500

Adaptive scheduling module 510

Control subsystem 511

Policy management subsystem 513

Resource management subsystem 514

Algorithm subsystem 512

Management plane 520

SDN control module 530

VIM module 540

FIG. 10

# INTERNATIONAL SEARCH REPORT

| International application No. |
| --- |
| PCT/CN2017/106001 |

**A.  CLASSIFICATION OF SUBJECT MATTER**

H04L 12/24 (2006.01) i; H04L 29/08 (2006.01) i

According to International Patent Classification (IPC) or to both national classification and IPC

**B.  FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT; WPI; EPODOC; CNKI; IEEE: 云，集合，组件，分布式，映射，物理，逻辑，节点，可用，资源，集群，虚拟，底层，cloud, distributed, virtual, map, physical, node, logic, bottom

**C.  DOCUMENTS CONSIDERED TO BE RELEVANT**

| Category* | Citation of document, with indication, where appropriate, of the relevant passages | Relevant to claim No. |
| --- | --- | --- |
| X | CN 104243258 A (INSTITUTE OF ACOUSTICS, CHINESE ACADEMY OF SCIENCES et al.) 24 December 2014 (24.12.2014), claims 1-3, and description, paragraphs [0005]-[0060] | 1-24 |
| X | CN 102223281 A (TSINGHUA UNIVERSITY) 19 October 2011 (19.10.2011), claims 1-6, and description, paragraphs [0012]-[0032] | 1-24 |
| A | CN 103179052 A (INSTITUTE OF ACOUSTICS, CHINESE ACADEMY OF SCIENCES) 26 June 2013 (26.06.2013), entire document | 1-24 |
| A | CN 105681153 A (BEIJING UNIVERSITY OF POSTS AND TELECOMMUNICATIONS) 15 June 2016 (15.06.2016), entire document | 1-24 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&" document member of the same patent family |

| Date of the actual completion of the international search | Date of mailing of the international search report |
| --- | --- |
| 08 December 2017 | 28 December 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer GONG, Lei Telephone No. (86-10) 52871131 |
| --- | --- |

Form PCT/ISA/210 (second sheet) (July 2009)

## INTERNATIONAL SEARCH REPORT
### Information on patent family members

| | International application No. |
|---|---|
| | PCT/CN2017/106001 |

| Patent Documents referred in the Report | Publication Date | Patent Family | Publication Date |
|---|---|---|---|
| CN 104243258 A | 24 December 2014 | WO 2014202016 A1 | 24 December 2014 |
| | | SG 11201510407 A1 | 28 January 2016 |
| CN 102223281 A | 19 October 2011 | None | |
| CN 103179052 A | 26 June 2013 | None | |
| CN 105681153 A | 15 June 2016 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201611225118 X